# EUROPEAN PATENT APPLICATION

(11) **EP 4 826 051 A1**
(43) Date of publication of application: **21.10.2026**
(21) Application number: 24904066.8
(22) Date of filing: 26.11.2024
(51) Int. Cl.: C22C 38/04, C22C 38/02, C22C 38/06, C22C 38/60, C22C 38/00, C22C 38/38, C22C 38/22, C22C 38/28, C23C 2/06, C23C 2/40

(54) **PLATED STEEL SHEET AND MANUFACTURING METHOD THEREOF**

(30) Priority: 14.12.2023 KR 20230182448
(71) Applicant: POSCO Co., Ltd, Gyeongsangbuk-do 37859 (KR)
(72) Inventor: SONG, Tae-Jin, Gwangyang-si, Jeollanam-do 57807 (KR); KANG, Ki-Cheol, Gwangyang-si, Jeollanam-do 57807 (KR); LEE, Dae-Geon, Gwangyang-si, Jeollanam-do 57807 (KR)
(74) Representative: Meissner Bolte Partnerschaft mbB
(86) International application number: PCT/KR2024/018816
(87) International publication number: WO 2025/127501

(57) **Abstract**

One aspect of the present invention provides a plated steel sheet. The plated steel sheet comprises: a base steel sheet; and a plating layer formed on at least one surface of the base steel sheet, wherein the base steel sheet contains, in wt%, 0.05-0.25% of carbon (C), 0.001-0.6% of silicon (Si), 1.2-3.0% of manganese (Mn), 0.001-1.0% of aluminum (Al), 0.0001-0.05% of phosphorus (P), 0.0001-0.05% of sulfur (S), and 0.0001-0.02% of nitrogen (N), with the remainder comprising Fe and inevitable impurities, the microstructure of the base steel sheet includes 65-90 area% of a first phase containing bainitic ferrite, the microstructure of the base steel sheet includes 10-35 area% of a second phase containing a tempered martensite-austenite composite phase (TMA phase) and at least one among tempered low-temperature bainite and tempered lath martensite, and the area fraction of the tempered martensite-austenite composite phase relative to the total area fraction of the microstructure may be less than 3 area%.

## Description

### Technical Field

The present disclosure relates to a plated steel sheet and a manufacturing method thereof. More specifically, the present disclosure relates to a plated steel sheet that may be used for a structural chassis member of an automobile.

### Background Art

Recently, a transition from internal combustion engine automobiles to eco-friendly automobiles, including electric automobiles, has been taking place in the automobile market in order to reduce global warming. As this transition has progressed, the types of parts constituting an automobile have also changed, and the weight of the automobile has changed accordingly. Specifically, it is known that the weight of an electric automobile increases, relative to that of an internal combustion engine automobile by approximately the weight of the battery.

Among the parts constituting an automobile, chassis parts support the body of the automobile and are important parts for ensuring ride comfort and driving safety by absorbing vibrations and impacts from the road surface during driving. When the weight of an automobile increases, the fatigue load applied to chassis parts also increases, and thus a steel material for chassis parts of electric automobiles is required to have excellent fatigue strength.

In general, the fatigue strength of the steel material increases in proportion to the thickness of a part, and thus, when the thickness of the part decreases due to corrosion, the fatigue strength decreases, which may deteriorate driving safety. Particularly, in the case of a part manufactured from high-strength steel, a decrease in fatigue strength due to a reduction in thickness occurs to a relatively large extent, and thus it is necessary to apply, to chassis parts, a high-strength steel sheet having excellent corrosion resistance.

In addition, it is known that the fatigue strength of the steel material is proportional to tensile strength and/or yield strength. Accordingly, in the case of a steel sheet for use in automobile chassis parts, a method for improving tensile strength and/or yield strength is required in order to improve fatigue strength.

Meanwhile, since chassis parts are manufactured by press forming, there has been an increasing demand for improved form stability in order to ensure the dimensional accuracy of components. Specifically, springback is a phenomenon in which elastic recovery occurs again when stress is removed after plastic deformation, and when the yield strength of a material is excessive, it may be difficult to obtain a target part shape due to springback. Therefore, it is necessary to improve yield strength in order to ensure the fatigue strength of a material and, at the same time, to control an upper limit of yield strength in order to reduce springback.

In general, a hot-rolled plated steel sheet is manufactured by pickling a hot-rolled steel sheet to remove a scale layer from a surface thereof, heating the steel sheet to a temperature equal to or higher than a melting temperature of zinc to ensure wettability, and then immersing the steel sheet in molten zinc. In this case, since heating of the steel sheet is generally performed in a temperature range of 400°C to 700°C, in the case of high-strength steel including a low-temperature transformation structure, yield strength tends to increase rapidly due to heat treatment, and thus form stability during press forming may deteriorate.

In order to solve these problems, various technologies have been proposed for manufacturing a hot-rolled plated steel sheet having excellent strength. For example, Patent Document 1 discloses a method for manufacturing a hot-rolled steel sheet having excellent tensile strength by forming a microstructure including 10 to 55% of ferrite and 45 to 90% of bainite and martensite. However, in Patent Document 1, although the hot-rolled steel sheet has a tensile strength of 950 MPa or more, changes in yield strength that occur during heat treatment before plating and the resulting press formability are not taken into consideration.

Accordingly, in order to ensure the driving safety of chassis parts for eco-friendly automobiles such as electric automobiles, there is a need to develop a steel material having high tensile strength and yield strength and thus excellent fatigue life, having excellent corrosion resistance due to a plating layer formed on a surface thereof, and being capable of controlling an upper limit of yield strength so as to facilitate press forming.

(Patent Document 1) Korean Patent Laid-Open Publication No. 10-2020-0011475

### Summary of Invention

### Technical Problem

An aspect of the present disclosure is to provide a plated steel sheet having excellent fatigue performance due to high tensile strength and yield strength, while also having excellent form stability through control of an upper limit of yield strength, and a method for manufacturing the same.

An object of the present disclosure is not limited to the above description. Additional objects of the present disclosure are described throughout the present specification, and those skilled in the art to which the present disclosure pertains will have no difficulty in understanding the additional objects of the present disclosure from the description set forth in the present specification.

### Solution to Problem

According to an aspect of the present disclosure, there is provided a plated steel sheet. The plated steel sheet may include: a base steel sheet; and a plating layer formed on at least one surface of the base steel sheet, wherein the base steel sheet contains, by wt%, 0.05 to 0.25 of carbon (C), 0.001 to 0.6 of silicon (Si), 1.2 to 3.0 of manganese (Mn), 0.001 to 1.0 of aluminum (Al), 0.0001 to 0.05 of phosphorus (P), 0.0001 to 0.05 of sulfur (S), 0.0001 to 0.02 of nitrogen (N), and a balance of Fe and inevitable impurities, a microstructure of the base steel sheet includes 65 to 90 area% of a first phase including bainitic ferrite, the microstructure of the base steel sheet includes 10 to 35 area% of a second phase including one or more of tempered low-temperature bainite and tempered lath martensite, and a tempered martensite-austenite constituent (TMA phase), and an area fraction of the tempered martensite-austenite constituent relative to the total area fraction of the microstructure is less than 3 area%.

In addition, in the plated steel sheet described above, the second phase may have an average equivalent circle diameter of 2 to 20 µm.

In addition, in any one of the plated steel sheets described above, the microstructure of the base steel sheet may further include less than 5 area% of carbides relative to the total area fraction of the microstructure.

In addition, in any one of the plated steel sheets described above, the base steel sheet may further contain, by wt%, one or more of 0.01 to 2.0 of chromium (Cr), 0.01 to 2.0 of molybdenum (Mo), 0.001 to 0.2 of titanium (Ti), and 0.001 to 0.2 of niobium (Nb).

In addition, in any one of the plated steel sheets described above, the plated steel sheet may have a yield strength of 700 to 950 MPa.

In addition, in any one of the plated steel sheets described above, the plated steel sheet may have a tensile strength of 980 MPa or more and an elongation of 9% or more.

According to another aspect of the present disclosure, there is provided a method for manufacturing a plated steel sheet. The method may include reheating a slab containing 0.05 to 0.25 of carbon (C), 0.001 to 0.6 of silicon (Si), 1.2 to 3.0 of manganese (Mn), 0.001 to 1.0 of aluminum (Al), 0.0001 to 0.05 of phosphorus (P), 0.0001 to 0.05 of sulfur (S), 0.0001 to 0.02 of nitrogen (N), and a balance of Fe and inevitable impurities at 1,100 to 1,350°C; hot-rolling the heated slab to obtain a hot-rolled steel sheet; subjecting the hot-rolled steel sheet to first cooling to a temperature of Bs or lower at a cooling rate of 30°C/s or more; subjecting the first-cooled steel sheet to second cooling to a temperature of (Bs+Ms)/2 or higher at a cooling rate of 20°C/s or less; subjecting the second-cooled steel sheet to third cooling to a temperature of Bs to Ms-40°C at a cooling rate of 30°C/s or more; coiling the third-cooled steel sheet; cooling the coiled steel sheet to room temperature; pickling the cooled steel sheet and subjecting the pickled steel sheet to heat treatment at 400 to 700°C; and plating the heat-treated steel sheet.

In addition, in the method described above, in the obtaining of the hot-rolled steel sheet, the heated slab may be hot-rolled at a finishing delivery temperature (FDT) of 800 to 1,150°C so that a value of the following Relational Expression 1 satisfies 5 to 15. 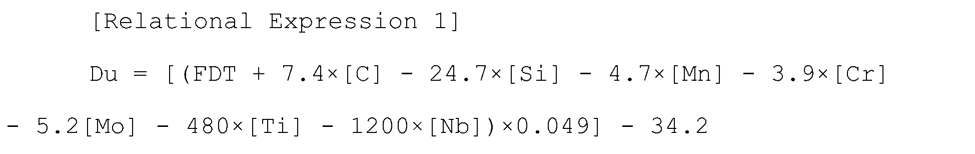 [Relational Expression 1] Du = [(FDT + 7.4×[C] - 24.7×[Si] - 4.7×[Mn] - 3.9×[Cr] - 5.2[Mo] - 480×[Ti] - 1200×[Nb])×0.049] - 34.2
(where Du represents an index indicating an effective grain size of austenite immediately before first cooling after hot rolling, FDT represents a finishing delivery temperature (°C), and each element represents a content (wt%).)

In addition, in any one of the methods described above, in the obtaining of the hot-rolled steel sheet, a total rolling reduction of the final two passes may be 10 to 40%.

In addition, in any one of the methods described above, the second cooling may be performed for a time (ts) satisfying the following Relational Expression 2.

[Relational Expression 2] $0.65 \leq 1 - exp \left[-k\left(T\right)\times {\left(ts\right)}^{2}\right] \leq 0.9$
(where k(T) represents a value defined by the following Relational Expression 3.)

[Relational Expression 3] $k \left(T\right) = \frac{20}{Du} exp \left\{-{\left(\frac{\left(T1+2\times T2\right) / 3 - 557 + 320 \left[C\right] + 35 \left[Si\right] + 90 \left[Mn\right] + 70 \left[Cr\right] + 120 \left[Mo\right]}{112}\right)}^{1.92}\right\}$
(where T1 represents a first cooling end temperature, T2 represents a second cooling end temperature, and each element represents a content (wt%).)

In addition, in any one of the methods described above, the heat treatment may be performed for 2 to 200 seconds.

In addition, in any one of the methods described above, in the plating, the heat-treated steel sheet may be zinc-plated by immersing the heat-treated steel sheet in a Zn-based plating bath.

### Advantageous Effects of Invention

According to the present disclosure, the plated steel sheet may have excellent fatigue performance due to high tensile strength and yield strength, and form stability during press forming may be improved through control of an upper limit of yield strength.

In addition, according to the present disclosure, since the plated steel sheet includes a plating layer, excellent corrosion resistance may be obtained.

Various and beneficial advantages and effects of the present disclosure are not limited to those described above and may be more readily understood in the course of describing specific embodiments in the present disclosure.

### Brief Description of Drawings

FIG. 1 shows photographs of appearances of plated steel sheets of Inventive Example 1 and Comparative Example 1.
FIG. 2 shows photographs of microstructures of Inventive Example 1 and Comparative Example 3 observed with a scanning electron microscope.

### Best Mode for Invention

Hereinafter, preferred embodiments in the present disclosure will be described. However, the embodiments in the present disclosure may be modified in various other forms, and the terms used in the present specification are used to describe the present disclosure and are not intended to limit the present disclosure. In addition, singular forms used in the present specification include plural forms, unless the context clearly indicates otherwise.

In the present specification, the term "include" is used to indicate that other components may be further included, rather than excluding other components, unless specifically stated otherwise.

In addition, unless otherwise specifically defined in the specification of the present disclosure, % means wt%.

Unless otherwise defined, all terms including technical terms and scientific terms used in the present specification have the same meanings as those commonly understood by those skilled in the art to which the present disclosure pertains. Previously defined terms are to be interpreted as having meanings consistent with the relevant technical literature and the disclosure herein.

In conventional steel sheets for use in chassis parts, a large number of low-temperature transformation structures (for example, bainite, martensite, and a martensite-austenite constituent (MA phase)) have been utilized in order to achieve high levels of yield strength and tensile strength. In addition, as demand for improved corrosion resistance has increased, steel sheets manufactured by heating hot-rolled steel sheets to 400 to 700°C and then performing plating have been used as steel materials for chassis parts.

However, in the case of such a steel sheet, the yield strength of the steel sheet increases remarkably, such that the dimensional accuracy of a part decreases due to springback after forming, making assembly difficult and causing deterioration in part productivity.

Accordingly, the inventors of the present disclosure have made efforts to develop a steel sheet capable of ensuring a high level of yield strength while controlling an upper limit thereof.

In general, it is known that a phenomenon in which yield strength increases after heat treatment before plating is exhibited by a bake-hardening phenomenon in which solid-solution carbon, which diffuses more readily due to heating in an annealing process, is pinned to dislocations present in a matrix structure and interferes with movement of the dislocations.

That is, the yield strength after heat treatment may be determined according to a dislocation density present in a matrix structure and a content of solid-solution carbon. The inventors of the present disclosure confirmed that the yield strength of the steel sheet after heat treatment may be controlled by controlling the dislocation density and solid-solution carbon in the hot-rolled steel sheet before heat treatment, and conducted research on this basis.

Specifically, carbon present in a supersaturated state in a second phase diffuses into the matrix structure as the temperature rises during heat treatment and becomes pinned to dislocations present in the matrix structure. That is, a content of solid-solution carbon present in the matrix structure may be affected by a type, fraction, and/or size of the second phase.

The inventors of the present disclosure experimentally confirmed that, by appropriately controlling an alloy composition of the steel sheet and hot-rolling, cooling, and heat-treatment conditions and thereby optimizing fractions and types of a matrix structure and a second phase in a microstructure, it is possible to ensure a high level of yield strength while controlling an upper limit thereof, and completed the present disclosure based on these results.

In an embodiment in the present disclosure, a microstructure of a base steel sheet serving as a base for a plated steel sheet may include bainitic ferrite as a first phase and may include tempered low-temperature bainite, tempered lath martensite, and/or a tempered martensite-austenite constituent (TMA phase) as a second phase.

Hereinafter, the present disclosure will be described in detail.

A plated steel sheet according to an embodiment in the present disclosure may include a base steel sheet; and a plating layer provided on at least one surface of the base steel sheet.

First, an alloy composition of the base steel sheet will be described. Unless otherwise stated, contents in the alloy composition below mean wt%.

### Carbon (C): 0.05 to 0.25%

Carbon (C) is the most economical and effective element for strengthening steel. In addition, C may diffuse into austenite during transformation of bainitic ferrite and stabilize austenite, such that, in a subsequent cooling process, austenite may transform into low-temperature bainite and lath martensite as a second phase, thereby improving tensile strength and/or yield strength of a steel sheet.

When a content of C is less than 0.05%, a fraction of the second phase may decrease, and it may be difficult to sufficiently ensure tensile strength and/or yield strength. In addition, when the content of C exceeds 0.25%, the fraction of the second phase increases excessively, and thus it may be difficult to ensure elongation and weldability may be reduced. That is, the content of C may be 0.05 to 0.25%, more specifically 0.06 to 0.24%, and still more specifically 0.07 to 0.22%.

### Silicon (Si): 0.001 to 0.6%

Silicon (Si) is an element that improves hardenability of steel and may improve strength through a solid-solution strengthening effect. In addition, Si may delay formation of carbides and prevent formation of pearlite, thereby allowing transformation into low-temperature bainite and lath martensite as a second phase and improving yield strength and/or tensile strength.

When a content of Si is less than 0.001%, it may be difficult to ensure an effect of improving strength by solid-solution strengthening. In addition, when the content of Si exceeds 0.6%, an oxide may be formed on a surface during plating, wettability of molten zinc may decrease, and plating quality may deteriorate. That is, the content of Si may be 0.001 to 0.6%, specifically 0.001 to 0.600%, more specifically 0.01 to 0.55%, and still more specifically 0.02 to 0.5%.

### Manganese (Mn): 1.2 to 3.0%

Manganese (Mn) is an element that improves hardenability of steel and may facilitate formation of low-temperature transformation structures by preventing formation of granular ferrite during cooling after finish rolling.

When a content of Mn is less than 1.2%, the fraction of the second phase may be insufficient, making it difficult to sufficiently ensure strength. In addition, when the content of Mn exceeds 3.0%, hardenability increases significantly, such that bainite transformation may not proceed smoothly in a cooling zone, the time required to ensure a fraction of bainitic ferrite as a first phase may increase excessively, and elongation may decrease. That is, the content of Mn may be 1.2 to 3.0%, more specifically 1.5 to 2.8%, and still more specifically 1.8 to 2.5%.

### Aluminum (Al): 0.001 to 1.0%

Aluminum (Al) is an element added for deoxidation and may improve strength through a solid-solution strengthening effect.

When a content of Al is less than 0.001%, it may be difficult to sufficiently obtain strength improvement through solid-solution strengthening. In addition, when the content of Al exceeds 1.0%, oxide and/or nitride inclusions in the steel may increase, which may reduce formability of the steel sheet. That is, the content of Al may be 0.001 to 1.0%, specifically 0.001 to 1.000%, more specifically 0.005 to 0.8%, and still more specifically 0.01 to 0.5%.

### Phosphorus (P): 0.0001 to 0.05%

Phosphorus (P) is an impurity inevitably contained in steel, and may be a major factor in reducing workability of steel due to segregation. Therefore, a lower content of P may be more effective in improving workability of the steel sheet.

A lower limit of the content of P may be 0%. However, in view of limitations in the manufacturing process or an excessive increase in manufacturing cost, the content of P may be 0.0001% or more, and more specifically 0.0002% or more. In addition, when the content of P exceeds 0.05%, workability of the steel sheet may be reduced. Accordingly, the content of P may be 0.05% or less, more specifically 0.050% or less, and still more specifically 0.045% or less.

### Sulfur (S): 0.0001 to 0.05%

Sulfur (S), an impurity inevitably contained in steel, combines with Mn and the like to form non-metallic inclusions, and may thus be a major factor in reducing workability of steel. Therefore, a lower content of S may be more effective in improving workability of the steel sheet.

A lower limit of the content of S may be 0%. However, in view of limitations in the manufacturing process or an excessive increase in manufacturing cost, the content of S may be 0.0001% or more, and more specifically 0.0002% or more. In addition, when the content of S exceeds 0.05%, workability of the steel sheet may be reduced. Accordingly, the content of S may be 0.05% or less, and more specifically 0.045% or less.

### Nitrogen (N): 0.0001 to 0.02%

Nitrogen (N), an impurity inevitably contained in steel, reacts with Al and the like to precipitate nitrides, and may thus reduce workability of steel. Therefore, a lower content of N may be more effective in improving workability of the steel sheet.

A lower limit of the content of N may be 0%. However, in view of limitations in the manufacturing process or an excessive increase in manufacturing cost, the content of N may be 0.0001% or more, and more specifically 0.0002% or more. In addition, when the content of N exceeds 0.02%, workability of the steel sheet may be reduced. Accordingly, the content of N may be 0.02% or less, specifically 0.0200% or less, more specifically 0.015% or less, and still more specifically 0.0150% or less.

In addition to the alloy composition described above, the base steel sheet may further contain one or more of chromium (Cr), molybdenum (Mo), titanium (Ti), and niobium (Nb).

### Chromium (Cr): 0.01 to 2.0%

Chromium (Cr) is an element that improves hardenability of steel and may improve yield strength and/or tensile strength by suppressing formation of ferrite during cooling after finish rolling and causing the second phase to become a low-temperature transformation phase (for example, tempered low-temperature bainite and/or tempered lath martensite).

When a content of Cr is less than 0.01%, the above-described effects may not be sufficiently obtained. In addition, when the content of Cr exceeds 2.0%, hardenability increases excessively, and bainite transformation may not proceed smoothly in a cooling zone. As a result, the time required to ensure a fraction of bainitic ferrite as the first phase may increase excessively, which may reduce elongation. That is, the content of Cr may be 0.01 to 2.0%, specifically 0.01 to 2.00%, more specifically 0.05 to 1.5%, and still more specifically 0.1 to 1.0%.

### Molybdenum (Mo): 0.01 to 2.0%

Molybdenum (Mo) is an element that significantly improves hardenability of steel and may improve strength through a solid-solution strengthening effect. In addition, Mo may suppress formation of ferrite during cooling after finish rolling and cause the second phase to become a low-temperature transformation phase (for example, tempered low-temperature bainite and/or tempered lath martensite), thereby improving yield strength and/or tensile strength.

When a content of Mo is less than 0.01%, the above-described effects may not be sufficiently obtained. In addition, when the content of Mo exceeds 2.0%, hardenability increases excessively, and bainite transformation may not proceed smoothly in a cooling zone. As a result, the time required to ensure a fraction of bainitic ferrite as the first phase may increase excessively, which may reduce elongation. That is, the content of Mo may be 0.01 to 2.0%, specifically 0.01 to 2.00%, more specifically 0.02 to 1.0%, and still more specifically 0.05 to 0.3%.

### Titanium (Ti): 0.001 to 0.2%

Titanium (Ti), an element that forms carbonitrides, may control an austenite grain size in conjunction with a finishing delivery temperature because it delays recrystallization behavior of steel during hot rolling.

When a content of Ti is less than 0.001%, the above-described effects may not be sufficiently obtained. In addition, when the content of Ti exceeds 0.2%, the austenite grain size becomes excessively fine, and thus a fraction of a martensite-austenite constituent (TMA phase) constituting the second phase may increase excessively, which may deteriorate form stability. That is, the content of Ti may be 0.001 to 2.0%, specifically 0.001 to 2.00%, more specifically 0.01 to 1.5%, and still more specifically 0.03 to 0.08%.

### Niobium (Nb): 0.001 to 0.2%

Niobium (Nb) may control an austenite grain size because it delays recrystallization behavior of steel during hot rolling.

When a content of Nb is less than 0.001%, the above-described effects may not be sufficiently obtained. In addition, when the content of Nb exceeds 0.2%, the austenite grain size becomes excessively fine, and thus a fraction of a martensite-austenite constituent (TMA phase) constituting the second phase may increase excessively, which may deteriorate form stability. That is, the content of Nb may be 0.001 to 2.0%, specifically 0.001 to 2.000%, more specifically 0.01 to 1.0%, and still more specifically 0.02 to 0.05%.

The base steel sheet may contain the above components and may contain iron (Fe) as the remaining component. In addition, in a typical manufacturing process, unintended impurities may inevitably be introduced from raw materials or the surrounding environment, and thus such impurities cannot be excluded. Since these impurities are readily understandable to those skilled in the typical manufacturing process, all details thereof are not specifically mentioned in the present specification.

The microstructure of the base steel sheet may include, as a first phase, bainitic ferrite and, as a second phase, tempered low-temperature bainite, tempered lath martensite, and/or a tempered martensite-austenite constituent (TMA phase).

### First phase (primary phase): 65 to 90 area%

The first phase may include bainitic ferrite. Here, the first phase may refer to a phase occupying the largest area fraction in the microstructure and, more specifically, may refer to a phase having an area fraction of more than 50 area% based on the total area fraction of the microstructure.

After hot rolling, the steel sheet is cooled in the first cooling to a temperature of Bs (bainite transformation start temperature) or lower while avoiding transformation into equiaxed ferrite, and then bainite transformation proceeds by slow cooling in the subsequent second cooling. In this case, since bainite transformation occurs in a transformation region of high-temperature bainite, formation of bainitic ferrite and diffusion of carbon into untransformed austenite occur, and carbides may not be formed in bainitic ferrite.

In addition, although a large number of dislocations are present in bainitic ferrite formed by shear transformation, a dislocation density may decrease to an appropriate level due to a recovery phenomenon during second cooling and after coiling. That is, bainitic ferrite may improve elongation of the steel sheet and, at the same time, may reduce the likelihood that carbon atoms become pinned to dislocations present in a matrix structure after heat treatment, thereby preventing an excessive increase in yield strength.

When the area fraction of the first phase is less than 65%, it may be difficult to sufficiently ensure elongation. In addition, when the area fraction of the first phase exceeds 90%, a fraction of low-temperature transformation structures that serve to improve strength (for example, tempered low-temperature bainite and/or tempered lath martensite), is insufficient, and thus it may be difficult to ensure appropriate yield strength and/or tensile strength (for example, a yield strength of 750 MPa or more and/or a tensile strength of 980 MPa or more). That is, the area fraction of the first phase may be 65 to 90%, specifically 65.0 to 90.0%, more specifically 73 to 88%, and still more specifically 70 to 85%.

### Second phase (secondary phase): 10 to 35 area%

The second phase may include one or more of tempered low-temperature bainite and tempered lath martensite.

As formation of bainitic ferrite proceeds during second cooling, diffusion of carbon into untransformed austenite also proceeds, and carbon enrichment may occur in the untransformed austenite. The untransformed austenite may undergo transformation into the second phase, including low-temperature bainite, lath martensite, and a martensite-austenite constituent (MA phase), during an additional cooling process after second cooling and during a cooling process after coiling.

When bainitic ferrite is formed during second cooling, untransformed austenite distributed in the structure varies in size depending on location, and because a content of carbon in the austenite varies depending on the size of the austenite, a type of the second phase may also vary. For example, relatively large untransformed austenite with a low carbon content may transform into low-temperature bainite during cooling to a coiling temperature. In addition, for example, relatively small austenite may not transform into low-temperature bainite but may instead transform into lath martensite at a lower temperature due to its high stability.

In the process of heating the steel sheet cooled after coiling to 400 to 700°C, the low-temperature bainite and lath martensite are tempered, and the microstructure and physical properties may change. In the steel sheet cooled to room temperature after coiling, the low-temperature bainite and lath martensite both include iron carbides at grain boundaries and within grains in a lath structure. Therefore, during tempering, a small amount of carbon atoms present in the second phase may be consumed mainly for further growth of the carbides and may thus have less effect on increasing a concentration of solid-solution carbon in the matrix structure. Accordingly, when the second phase of the steel sheet is composed of low-temperature bainite and lath martensite, an increase in yield strength after heat treatment may be suppressed.

Meanwhile, because the tempered low-temperature bainite and tempered lath martensite both include iron carbides at grain boundaries and within grains in a lath structure, it should be noted that their fractions are evaluated on a combined basis.

The second phase may include a tempered martensite-austenite constituent (TMA phase). Here, the tempered martensite-austenite constituent may refer to a structure tempered by subjecting a martensite-austenite constituent (MA phase) to heat treatment. As the martensite-austenite constituent is subjected to heat treatment, some carbon may diffuse from the MA phase into the matrix structure or may form carbides in the MA phase. As such, through tempering, the amount of supersaturated solid-solution carbon decreases, and thus the tempered martensite-austenite constituent may have lower strength than before heat treatment.

During second cooling, small austenite has the highest carbon concentration. Therefore, small austenite may not transform into low-temperature bainite or martensite immediately after coiling, but may instead transform into martensite in a final cooling stage or remain as austenite without transforming into martensite during cooling to room temperature. When carbon is non-uniformly distributed in austenite, local transformation into martensite may occur within a single austenite unit structure, or retained austenite may remain therein, thereby forming a martensite-austenite constituent (MA phase).

In this case, martensite having a high carbon content has a plate shape (plate type martensite), rather than a lath shape, and, because the Ms temperature is low, carbides are not formed therein even during a subsequent slow cooling process. That is, in the process of subjecting the steel sheet cooled after coiling to heat treatment at 400 to 700°C, the MA phase may be a main cause of a significant increase in yield strength after heat treatment by releasing a considerable amount of carbon atoms into the matrix structure due to a high level of supersaturated carbon concentration and the absence of internal carbides.

In addition, during phase transformation in cooling after coiling, a large number of dislocations are generated in the surrounding matrix structure by lattice expansion, and, because the MA phase has a low phase transformation temperature, a decrease in dislocation density due to recovery of dislocations may not occur. Accordingly, dislocations remaining in the matrix structure near the second phase may serve as a main path through which carbon atoms diffuse from the supersaturated second phase into the matrix structure during heat treatment.

In addition, during heat treatment, diffusion of carbon from the second phase into the matrix structure may proceed via an interface between the matrix structure and the second phase. That is, because carbon diffuses more readily as an area of the interface between the matrix structure and the second phase increases, when the MA phase is finely dispersed, the yield strength after heat treatment may increase significantly.

In the present disclosure, excessive formation and fine dispersion of the MA phase are minimized, thereby preventing an excessive increase in yield strength and allowing an upper limit of yield strength to be controlled. Specifically, by appropriately controlling an equivalent circle diameter of the second phase, excessive formation and fine dispersion of the MA phase may be minimized. In this case, the equivalent circle diameter of the second phase refers to a diameter of a circle having the same area as that of a particle when observed in a cross section perpendicular to the steel sheet, and may be measured by analysis at a magnification of 5,000× using a scanning electron microscope and an image analyzer.

In the present disclosure, by controlling a lower limit of the average equivalent circle diameter of the second phase, a value of Du described below may be derived within an appropriate range. For example, when the average equivalent circle diameter of the second phase is less than 2 µm, diffusion of carbon into austenite is facilitated, and the probability of remaining as an MA phase may increase. That is, when the average equivalent circle diameter of the second phase is excessively small, an area of an interface between the matrix structure and the second phase increases, and diffusion of carbon from the MA phase into the matrix structure during heat treatment becomes easier, such that yield strength may increase excessively. That is, the average equivalent circle diameter of the second phase may be 2 µm or more, specifically 2.0 µm or more, more specifically 2.2 µm or more, and still more specifically 2.5 µm or more.

Meanwhile, when the second phase is coarse, the probability that the second phase is present as tempered low-temperature bainite and tempered martensite increases, but when the average equivalent circle diameter of the second phase exceeds 20 µm, the effect of increasing strength may decrease. That is, the average equivalent circle diameter of the second phase may be 20 µm or less, specifically 20.0 µm or less, more specifically 15 µm or less, and still more specifically 10 µm or less.

When an area fraction of the second phase is less than 10%, it may be difficult to ensure sufficient yield strength and tensile strength. In addition, when the area fraction of the second phase exceeds 35%, it may be difficult to ensure sufficient elongation because an area fraction of the matrix structure decreases. That is, the area fraction of the second phase may be 10 to 35%, specifically 10.0 to 35.0%, more specifically 12 to 30%, and still more specifically 15 to 27%.

An area fraction of a tempered martensite-austenite constituent (TMA phase) relative to the total area fraction of the microstructure may be less than 3%. When the area fraction of the TMA phase is 3% or more, as described above, yield strength after heat treatment may increase excessively, and form stability during press forming may deteriorate. That is, the area fraction of the TMA phase may be less than 3%, specifically less than 3.0%, more specifically less than 1%, and still more specifically less than 0.5%. In addition, because a lower area fraction of the TMA phase is more effective in deriving strength at an appropriate level, a lower limit thereof may not be particularly limited. However, as a non-limiting example, the TMA phase may be 0%, more than 0%, 0.01% or more, 0.05% or more, or 0.1% or more.

In addition to the above-described matrix structure and second phase, the microstructure of the base steel sheet may further include, as another structure, less than 5 area% of carbides relative to the total area fraction of the microstructure.

For example, iron carbides may be formed together with diffusion of carbon into austenite during bainite transformation. When iron carbides are included excessively, a fraction of the second phase (low-temperature transformation structures), which allows tensile strength and yield strength to be appropriately controlled, may decrease, and thus it may be difficult to achieve the effects intended in the present disclosure.

In addition, for example, when the base steel sheet further contains Ti and/or Nb, the microstructure of the base steel sheet may include alloy carbonitrides. In this case, an additional strengthening effect due to grain refinement may be expected, but coarse carbides in the steel may reduce toughness of the steel. That is, an area fraction of the carbides (including iron carbides and/or alloy carbonitrides) relative to the total area fraction of the microstructure may be less than 5%, and more specifically may be less than 5.0%.

The plated steel sheet may include a plating layer provided on at least one surface of the base steel sheet. The plating layer may be disposed on at least one surface of the steel sheet and may improve corrosion resistance.

The plating layer may be composed of any one selected from zinc, aluminum, a zinc-based alloy, and an aluminum-based alloy, and specifically may be composed of a zinc-based alloy. For example, when the plating layer is composed of a zinc-based alloy, the plating layer may contain one or more selected from aluminum (Al), magnesium (Mg), nickel (Ni), and iron (Fe), and zinc (Zn) as the balance. However, the composition of the plating layer is not limited thereto and may have a composition commonly used in the art.

The plating layer may be formed by performing hot-dip plating on at least one surface of the base steel sheet. However, the plating method is not limited thereto, and methods commonly used in the art, such as electroplating, vacuum deposition plating, and cladding, may be applied.

The plated steel sheet according to an embodiment in the present disclosure may have a yield strength of 700 to 950 MPa. In conventional steel sheets, yield strength increased excessively after heat treatment before plating, leading to poor dimensional accuracy of manufactured parts due to springback, difficulty in assembly, and reduced part productivity. However, in the present disclosure, the fractions, types, and sizes of the matrix structure and the second phase in the microstructure are optimized, such that excellent form stability during press forming may be provided while ensuring a high level of yield strength and controlling an upper limit thereof.

The plated steel sheet according to an embodiment in the present disclosure may have a tensile strength of 980 MPa or more and an elongation of 9% or more. Because the plated steel sheet has an appropriate yield strength, tensile strength, and/or elongation, excellent fatigue strength and form stability may be ensured.

Hereinafter, a method for manufacturing a plated steel sheet according to an embodiment in the present disclosure will be described.

A steel sheet may be manufactured by performing a series of processes of reheating, hot rolling, cooling, coiling, heat treatment, and plating on a slab having the alloy composition as described above.

Hereinafter, conditions for each of the above processes will be described in detail.

### [Slab reheating]

Before hot rolling is performed, a slab satisfying the alloy composition of the base steel sheet described above may be subjected to homogenization by reheating the slab. A heating temperature during the reheating may be 1,100 to 1,350°C. When the heating temperature is lower than 1,100°C, homogenization of alloying elements may not be sufficiently performed. In addition, when the heating temperature exceeds 1,350°C, oxides may be excessively formed on a surface of the slab, which may reduce surface quality of the plated steel sheet. That is, the heating temperature may be 1,100 to 1,350°C, more specifically 1,150 to 1,300°C, and still more specifically 1,180 to 1,250°C.

### [Hot rolling]

The heated slab may be hot-rolled to obtain a hot-rolled steel sheet.

After hot rolling, a grain size of austenite may be affected by alloy composition, a finishing delivery temperature, and/or a rolling reduction, which may affect formation behavior of ferrite and bainite in a subsequent cooling process and a configuration of a final microstructure. In addition, a fraction of a martensite-austenite constituent (MA phase), one of factors determining tensile strength and yield strength, is affected by the austenite grain size after hot rolling, and a probability of being present as the MA phase may increase as an average equivalent circle diameter of the second phase decreases. Although the average equivalent circle diameter of the second phase is affected by nucleation behavior in bainite transformation, the average equivalent circle diameter of the second phase cannot be greater than the size of austenite before transformation due to a characteristic of shear transformation. Accordingly, the average equivalent circle diameter of the second phase may be controlled more effectively by controlling the austenite grain size after hot rolling.

Accordingly, the inventors of the present disclosure were able to manufacture a plated steel sheet having an appropriately controlled final microstructure and ensuring desired tensile strength and yield strength by controlling a finishing delivery temperature, an effective grain size of austenite derivable from contents of alloying elements contained in the slab and the finishing delivery temperature, and a total rolling reduction of the final two passes.

In the obtaining of the hot-rolled steel sheet, the finishing delivery temperature (FDT) may be 800 to 1,150°C. When the FDT is lower than 800°C, a rolling load may increase excessively, resulting in deterioration in workability or inferior anisotropy. In addition, when the FDT exceeds 1,150°C, oxides may be excessively formed on a surface of the steel sheet after rolling and may not be effectively removed even after pickling, which may reduce surface quality of the steel sheet. That is, the FDT may be 800 to 1,150°C, more specifically 820 to 1,100°C, and still more specifically 850 to 950°C.

In the obtaining of the hot-rolled steel sheet, the heated slab may be hot-rolled within the FDT range so that a value of the following Relational Expression 1 satisfies 5 to 15. When the value of Du is 5 to 15, an area fraction of the TMA phase is controlled to less than 3%, such that a yield strength of 950 MPa or less may be obtained. For example, when the finishing delivery temperature is excessively low and the value of Du is less than 5 (that is, when a grain size of austenite becomes excessively fine), the yield strength may increase significantly because the TMA phase is excessively formed and diffusion of carbon into the matrix structure becomes easier during the heat treatment process. In addition, when the value of Du exceeds 15, austenite grains become excessively coarse, which may delay bainite transformation and thus cause a decrease in elongation.
[Relational Expression 1] 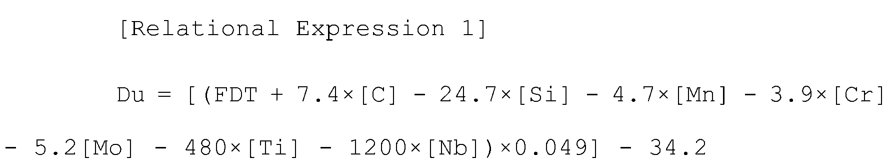 Du = [(FDT + 7.4×[C] - 24.7×[Si] - 4.7×[Mn] - 3.9×[Cr] - 5.2[Mo] - 480×[Ti] - 1200×[Nb])×0.049] - 34.2
(where Du represents an index indicating an effective grain size of austenite immediately before first cooling after hot rolling, FDT represents a temperature (°C) of the hot-rolled steel sheet immediately after hot rolling, and each element represents a content (wt%).)

In the obtaining of the hot-rolled steel sheet, a total rolling reduction of the final two passes may be 10 to 40%. When hot rolling is performed in multiple passes, a rolling load may be reduced and thickness may be controlled precisely. When the total rolling reduction of the final two passes is less than 10%, rolling reductions in previous passes may be relatively high, which may cause shape defects, or a temperature of the steel sheet may decrease rapidly, thereby reducing workability. In addition, when the total rolling reduction of the final two passes exceeds 40%, a rolling load in the final two passes may increase excessively, which may cause a reduction in workability. That is, the total rolling reduction of the final two passes may be 10 to 40%.

### [Cooling and coiling]

The hot-rolled steel sheet may be cooled in stages. Specifically, the hot-rolled steel sheet may be subjected to first cooling to a temperature of Bs or lower at a cooling rate of 30°C/s or more, and then subjected to second cooling to a temperature of (Bs+Ms)/2 or higher at a cooling rate of 20°C/s or less. Here, Bs represents a temperature (°C) at which bainite starts to form and may be calculated by the following equation: {Bs = 830-320×[C]-90×[Mn]-35×[Si]-70×[Cr]-120×[Mo]} (where each element represents a content (wt%)). In addition, Ms represents a temperature (°C) at which martensite starts to form during cooling and may be calculated by the following equation: {Ms = 550-330×[C]-41×[Mn]-20×[Si]-20×[Cr]-10×[Mo]+30×[Al]} (where each element represents a content (wt%)).

Through the first cooling, as the steel sheet is cooled to a temperature of Bs or lower, 65 to 90 area% of the first phase (for example, bainitic ferrite) may be ensured in the steel sheet. Thereafter, through the second cooling, growth of bainitic ferrite and diffusion into untransformed austenite may occur.

In the first cooling, a first cooling rate may be 30°C/s or more. In this case, a decrease in strength may be prevented by preventing phase transformation of granular ferrite formed during cooling. Although an upper limit of the first cooling rate is not particularly limited, when the steel sheet is cooled too rapidly, a plate shape may be distorted. Accordingly, the first cooling rate may be 200°C/s or less.

In second cooling, when a second cooling end temperature is lower than (Bs+Ms)/2, recovery of dislocations in bainitic ferrite during transformation may not proceed smoothly, which may cause a reduction in elongation. That is, the second cooling end temperature may be (Bs+Ms)/2 or higher, and specifically may be 500°C or higher.

The second cooling may be performed for a time (ts) satisfying the following Relational Expression 2. In the following Relational Expression 3, k(T) represents an index indicating a growth rate of bainitic ferrite and may be affected by an alloy composition of steel, a phase transformation temperature, and an austenite grain size after hot rolling. When the following Relational Expression 2, which represents a relationship between k(T) and a holding time of second cooling, is satisfied, bainitic ferrite may have an area fraction of 65 to 90%.

[Relational Expression 2] $0.65 \leq 1 - exp \left[-k\left(T\right)\times {\left(ts\right)}^{2}\right] \leq 0.9$
(where k(T) represents a value defined by the following Relational Expression 3.)

[Relational Expression 3] $k \left(T\right) = \frac{20}{Du} exp \left\{-{\left(\frac{\left(T1+2\times T2\right) / 3 - 557 + 320 \left[C\right] + 35 \left[Si\right] + 90 \left[Mn\right] + 70 \left[Cr\right] + 120 \left[Mo\right]}{112}\right)}^{1.92}\right\}$
(where T1 represents a first cooling end temperature, T2 represents a second cooling end temperature, and each element represents a content (wt%).)

When the value of Relational Expression 2 is less than 0.65, the first phase (bainitic ferrite) is not sufficiently formed, and thus it may be difficult to ensure sufficient elongation. In addition, when the value of Relational Expression 2 exceeds 0.9, the fraction of the first phase (bainitic ferrite) is excessive, and thus, although elongation is excellent, it may be difficult to ensure sufficient yield strength and tensile strength because a sufficient fraction of the second phase is not ensured.

In the second cooling, a second cooling rate may be 20°C/s or less. During the second cooling, the temperature may increase due to transformation heat generated by bainite phase transformation, but excessive heat generation may cause a dislocation density to decrease excessively. That is, the steel sheet may be maintained isothermally so that the temperature of the steel sheet does not increase due to transformation heat, or the second cooling may be performed at a cooling rate of 20°C/s or less. When the second cooling rate exceeds 20°C/s, phase transformation may proceed actively, which may cause the sheet shape to be distorted.

After the second cooling is completed, the steel sheet may be subjected to third cooling to a temperature of Bs to Ms-40°C at a cooling rate of 30°C/s or more, and the third-cooled steel sheet may be coiled.

In the third cooling, a third cooling end temperature may be in a range of Bs to Ms-40°C. During the second cooling, austenite is stabilized, and the Ms temperature is substantially lowered. That is, in the third cooling, a lower limit of the third cooling end temperature may be set lower than the Ms temperature, and when bainitic ferrite as the first phase has reached 65% or more, a temperature of Ms-40°C or higher may be applied.

In the third cooling, a third cooling rate may be 30°C/s or more. During the third cooling, transformation of low-temperature bainite proceeds, and, depending on a content of carbon in austenite, a portion thereof may transform into martensite even after coiling. Because hardenability of austenite is increased during the third cooling, the third cooling rate may be 30°C/s or more, and in this case, additional formation of high-temperature bainite may be avoided. Although an upper limit of the third cooling rate is not particularly limited, the third cooling rate may be 100°C/s or less in order to prevent distortion of a sheet shape.

Coiling may be performed at 350°C or higher. When the coiling temperature is lower than 350°C, carbide growth within low-temperature bainite and lath martensite as the second phase may not proceed smoothly, and thus a concentration of carbon atoms diffusing into the matrix structure in a subsequent heat treatment may increase, which may deteriorate form stability. That is, a lower limit of the coiling temperature may be 350°C.

### [Final cooling]

After the cooling and coiling processes are completed as described above, final cooling may be performed to obtain a desired hot-rolled steel sheet. In this case, the final cooling may be completed by performing air cooling.

### [Pickling and heat treatment]

The cooled hot-rolled steel sheet may be pickled and subjected to heat treatment.

Through the pickling, scale formed on a surface of the steel sheet may be removed. Specifically, the pickling may be performed in a hydrochloric acid bath. For example, a hydrochloric acid concentration of the hydrochloric acid bath may be 10 to 30 vol%. When the hydrochloric acid concentration is less than 10 vol%, the above-described effects may not be sufficiently obtained. In addition, when the hydrochloric acid concentration exceeds 30 vol%, hydrochloric acid may corrode the surface layer portion of the steel sheet.

As an example, the pickling may be performed for 10 to 500 seconds. When the pickling time is less than 10 seconds, scale on the steel sheet may not be completely removed. In addition, when the pickling time exceeds 500 seconds, hydrochloric acid may corrode the surface layer portion of the steel sheet.

Through the heat treatment, the second phase (low-temperature bainite, lath martensite, and/or an MA phase) formed in the steel sheet may be tempered. As the low-temperature bainite and lath martensite are tempered, carbides formed after coiling grow, the concentration of carbon present in a solid-solution state decreases, and the dislocation density also decreases, thereby reducing the strengthening effect. In addition, as the MA phase, in which no carbides are present, is tempered in the heat treatment, carbon atoms that are present therein in a solid-solution state may diffuse into bainitic ferrite as the first phase and become pinned to dislocations present in the matrix structure, thereby significantly increasing the yield strength of the plated steel sheet. In the present disclosure, by minimizing excessive formation and fine dispersion of the MA phase, an excessive increase in yield strength may be prevented and an upper limit of yield strength may be controlled.

The heat treatment may be performed at 400 to 700°C. When the heat treatment temperature is lower than 400°C, an interfacial reaction between molten zinc and the base steel sheet may be insufficient to form an alloying inhibition layer (for example, an Fe-Al-based compound) when the base steel sheet is immersed in a Zn-based plating bath for subsequent plating of the steel sheet, and plating wettability may be poor, which may reduce plating quality and plating adhesion. In addition, when the heat treatment temperature exceeds 700°C, the second phase formed in the hot-rolled steel sheet may be excessively tempered, and strength may decrease significantly. That is, the heat treatment temperature may be 400 to 700°C, more specifically 420 to 650°C, and still more specifically 450 to 600°C.

The heat treatment may be performed for 2 to 200 seconds. When the heating time is less than 2 seconds, temperature uniformity in thickness and width directions of the steel sheet may not be sufficiently ensured, such that surface quality and variations in material properties may deteriorate. In addition, when the heating time exceeds 200 seconds, fuel costs may increase excessively. That is, the heating time may be 2 to 200 seconds.

The heat treatment may be performed in a reducing atmosphere. Specifically, the reducing atmosphere may be maintained by introducing 3 to 20 vol% of hydrogen into nitrogen gas in an annealing furnace. When the hydrogen concentration in the annealing furnace is less than 3 vol%, reducing ability is insufficient, and thus oxides may be excessively formed on a surface of the steel sheet, which may reduce surface quality and plating adhesion. In addition, although an upper limit of the hydrogen concentration in the annealing furnace is not particularly limited, the hydrogen concentration may be 20 vol% or less in view of an increase in cost and a risk of explosion.

### [Plating]

A plating layer may be formed on one surface of the steel sheet by plating the heat-treated steel sheet. Specifically, in the plating, the heat-treated steel sheet may be zinc-plated by immersing the steel sheet in a Zn-based plating bath.

In the plating, a plating bath entry temperature of the steel sheet may be 420 to 500°C. When the plating bath entry temperature of the steel sheet is lower than 420°C, sufficient wettability may not be ensured at a contact interface between the steel sheet and molten zinc. In addition, when the plating bath entry temperature of the steel sheet exceeds 500°C, a reaction between the steel sheet and molten zinc becomes excessive, such that a Zetta phase, an Fe-Zn alloy phase, may be formed at the interface. As a result, adhesion of the plating layer may decrease, or dissolution of Fe from the steel sheet into the plating bath may become excessive, thereby causing dross to form in the plating bath. That is, the plating bath entry temperature of the steel sheet may be 420 to 500°C, more specifically 425 to 495°C, and still more specifically 430 to 490°C.

In the plating, a concentration of Al in the Zn-based plating bath may be 0.10 to 0.30 wt%. By appropriately controlling the concentration of Al, wettability of the plating layer and fluidity of the plating bath may be ensured. When the concentration of Al is less than 0.10 wt%, the above-described effects may not be sufficiently obtained. In addition, when the concentration of Al exceeds 0.30 wt%, an alloying inhibition layer may be formed excessively thick at an interface of the steel sheet. That is, the concentration of Al may be 0.10 to 0.30 wt%, more specifically 0.11 to 0.29 wt%, and still more specifically 0.12 to 0.28 wt%.

As an example, when the steel sheet to be manufactured is a galvannealed (GA) steel sheet, the concentration of Al may be 0.10 to 0.20 wt%. In addition, for example, when the steel sheet to be manufactured is a galvanized (GI) steel sheet, the concentration of Al may be 0.20 to 0.30 wt%. By appropriately controlling the concentration of Al according to the steel sheet to be manufactured, formation of dross in the plating bath may be maintained at an appropriate level, and performance such as plating surface quality may be ensured.

As an example, the manufacturing method according to an embodiment in the present disclosure may further include subjecting the plated steel sheet to galvannealing heat treatment. Specifically, a galvannealing (GA) temperature may be 440 to 580°C. When the galvannealing temperature is lower than 440°C, the amount of Fe diffusion is small and thus a degree of alloying may be insufficient, resulting in poor plating properties. In addition, when the galvannealing temperature exceeds 580°C, a powdering problem may occur due to excessive alloying. That is, the galvannealing temperature may be 440 to 580°C, more specifically 450 to 570°C, and still more specifically 460 to 560°C.

### Mode for Invention

Hereinafter, the present disclosure will be described in more detail with reference to Examples. However, it should be noted that the following Examples are intended only to illustrate the present disclosure in more detail and are not intended to limit the scope of the present disclosure. This is because the scope of the present disclosure is determined by the matters recited in the claims and matters reasonably inferred therefrom.

### (Examples)

Slabs having the alloy compositions shown in Table 1 (where the balance of the alloy composition was Fe and inevitable impurities) were prepared, and the slabs were manufactured into hot-rolled steel sheets according to the manufacturing conditions shown in Table 2. At this time, for all the steel sheets, the slab reheating temperature was set to 1,220°C, the thickness of the steel sheets after hot rolling was set to 3.2 mm, and a total rolling reduction of the final two passes during finish rolling was set to 25%. In addition, for all the steel sheets, a first cooling rate was set to 70°C/s, a second cooling rate was set to 3 to 7°C/s, and a third cooling rate was set to 45°C/s. In addition, the cooled steel sheet was pickled in a 20% hydrochloric acid solution for 100 seconds to remove scale, annealed in a reducing atmosphere containing 10% hydrogen, and then plated by immersion in a molten zinc plating bath.

**[Table 1]**

| Steel type | C | Si | Mn | P | S | Al | Cr | Mo | Ti | Nb | N |
|---|---|---|---|---|---|---|---|---|---|---|---|
| Steel type 1 | 0.11 | 0.3 | 2.1 | 0.012 | 0.002 | 0.025 | 0.2 | 0 | 0 | 0 | 0.004 |
| Steel type 2 | 0.07 | 0.2 | 2.1 | 0.012 | 0.003 | 0.023 | 0 | 0 | 0 | 0 | 0.004 |
| Steel type 3 | 0.18 | 0.03 | 1.8 | 0.012 | 0.003 | 0.018 | 0 | 0.1 | 0 | 0 | 0.003 |
| Steel type 4 | 0.09 | 0.5 | 2.5 | 0.011 | 0.003 | 0.025 | 0 | 0 | 0 | 0 | 0.004 |
| Steel type 5 | 0.11 | 0.2 | 2.1 | 0.012 | 0.002 | 0.022 | 0 | 0 | 0.05 | 0 | 0.004 |
| Steel type 6 | 0.15 | 0.03 | 1.8 | 0.012 | 0.002 | 0.028 | 0.2 | 0 | 0 | 0.03 | 0.003 |
| Steel type 7 | 0.22 | 0.03 | 1.8 | 0.012 | 0.003 | 0.025 | 0.5 | 0 | 0 | 0 | 0.004 |
| Steel type 8 | 0.07 | 0.5 | 1.8 | 0.012 | 0.002 | 0.025 | 0.8 | 0 | 0 | 0 | 0.004 |
| Steel type 9 | 0.08 | 0.03 | 2.2 | 0.012 | 0.002 | 0.3 | 0 | 0 | 0 | 0 | 0.004 |
| Steel type 10 | 0.11 | 0.8 | 2.1 | 0.012 | 0.002 | 0.025 | 0 | 0 | 0 | 0 | 0.004 |
| Steel type 11 | 0.07 | 0 | 0.8 | 0.012 | 0.002 | 0.025 | 0 | 0 | 0 | 0 | 0.004 |
| Steel type 12 | 0.11 | 0.3 | 2.1 | 0.0011 | 0.003 | 0.021 | 0 | 0 | 0.08 | 0.03 | 0.003 |
| Steel type 13 | 0.18 | 0.03 | 1.8 | 0.012 | 0.003 | 0.018 | 0.5 | 0.1 | 0 | 0.07 | 0.003 |

**[Table 2]**

| Classification | Steel type | Hot rolling and cooling | | | | | | | | | Heat treatment | |
|---|---|---|---|---|---|---|---|---|---|---|---|---|
| | | FDT | Relational Expression 1 | Bs (°C) | Ms (°C) | T1 (°C) | T2 (°C) | Ts (s) | Relational Expression 2 | T3 (°C) | Temperature (°C) | Time (s) |
| Inventive example 1 | Steel type 1 | 900 | 9.1 | 581 | 418 | 540 | 520 | 5 | 0.78 | 420 | 520 | 25 |
| Inventive example 2 | Steel type 2 | 920 | 10.2 | 612 | 437 | 550 | 530 | 4 | 0.79 | 420 | 520 | 25 |
| Inventive example 3 | Steel type 3 | 920 | 10.5 | 597 | 416 | 560 | 540 | 5.5 | 0.75 | 430 | 520 | 25 |
| Inventive example 4 | Steel type 4 | 920 | 9.7 | 559 | 409 | 520 | 500 | 6 | 0.84 | 400 | 520 | 25 |
| Inventive example 5 | Steel type 5 | 940 | 10.0 | 599 | 424 | 540 | 520 | 4 | 0.77 | 400 | 520 | 25 |
| Inventive example 6 | Steel type 6 | 940 | 9.7 | 605 | 423 | 540 | 520 | 4 | 0.84 | 390 | 520 | 25 |
| Inventive example 7 | Steel type 7 | 930 | 10.9 | 562 | 394 | 520 | 500 | 5 | 0.72 | 390 | 520 | 25 |
| Inventive example 8 | Steel type 8 | 920 | 9.7 | 572 | 428 | 540 | 520 | 6 | 0.78 | 420 | 520 | 25 |
| Inventive example 9 | Steel type 9 | 920 | 10.4 | 605 | 442 | 540 | 520 | 3.5 | 0.73 | 440 | 520 | 25 |
| Comparative example 1 | Steel type 10 | 920 | 9.5 | 578 | 412 | 540 | 520 | 5 | 0.72 | 420 | 520 | 25 |
| Comparative example 2 | Steel type 11 | 920 | 10.7 | 736 | 495 | 650 | 630 | 3.5 | 0.89 | 430 | 520 | 25 |
| Comparative example 3 | Steel type 12 | 880 | 4.5 | 595 | 422 | 540 | 520 | 3 | 0.81 | 420 | 520 | 25 |
| Comparative example 4 | Steel type 13 | 880 | 4.3 | 562 | 406 | 540 | 520 | 5 | 0.82 | 420 | 520 | 25 |
| Comparative example 5 | Steel type 2 | 920 | 10.2 | 612 | 437 | 550 | 530 | 5 | 0.92 | 420 | 520 | 25 |
| Comparative example 6 | Steel type 1 | 900 | 9.1 | 581 | 418 | 540 | 520 | 3 | 0.42 | 420 | 520 | 25 |
| Comparative example 7 | Steel type 1 | 900 | 9.1 | 581 | 418 | 540 | 520 | 5 | 0.78 | 420 | 720 | 25 |
| - FDT: Finishing delivery temperature (°C) | | | | | | | | | | | | |
| - Relational Expression 1: Du = [(FDT + 7.4×[C] - 24.7×[Si] - 4.7×[Mn] - 3.9×[Cr] - 5.2[Mo] - 480×[Ti] - 1200×[Nb])×0.049] - 34.2 (where Du represents an index indicating an effective grain size of austenite immediately before first cooling after hot rolling, FDT represents a finishing delivery temperature (°C), and each element represents a content (wt%)) | | | | | | | | | | | | |
| - Bs: Temperature (°C) at which bainite starts to form, and may be calculated by {Bs = 830-320×[C]-90×[Mn]-35×[Si]-70×[Cr]-120×[Mo]} (where each element represents a content (wt%)) | | | | | | | | | | | | |
| - Ms: Temperature (°C) at which martensite starts to form during cooling, and may be calculated by {Ms = 550-330×[C]-41×[Mn]-20×[Si]-20×[Cr]-10×[Mo]+30×[Al]} (where each element represents a content (wt%)) | | | | | | | | | | | | |
| - T1: First cooling end temperature | | | | | | | | | | | | |
| - T2: Second cooling end temperature | | | | | | | | | | | | |
| - Ts: Second cooling holding time | | | | | | | | | | | | |
| - Relational Expression 2: 1-exp[-k(T) × (ts)²] (where $k \left(T\right) = \frac{20}{Du} exp \left\{-{\left(\frac{\left(T1+2\times T2\right) / 3 - 557 + 320 \left[C\right] + 35 \left[Si\right] + 90 \left[Mn\right] + 70 \left[Cr\right] + 120 \left[Mo\right]}{112}\right)}^{1.92}\right\} ,$ T1 represents a first cooling end temperature, T2 represents a second cooling end temperature, and each element represents a content (wt%)) | | | | | | | | | | | | |
| - T3: Third cooling end temperature | | | | | | | | | | | | |

For Inventive Examples 1 to 8 and Comparative Examples 1 to 7 manufactured as described above, fractions of the microstructures, an average equivalent circle diameter of the second phase, yield strength (YS), tensile strength (TS), and elongation (El) before and after heat treatment were measured, and surface quality after heat treatment was evaluated. The results are shown in Table 3.

The fractions of the microstructures and the average equivalent circle diameter of the second phase were measured by etching specimens by a nital etching method and then analyzing the etched specimens at a magnification of 5,000× using a scanning electron microscope and an image analyzer.

The yield strength, tensile strength, and elongation before and after heat treatment are shown as results obtained by testing specimens prepared by taking JIS No. 5 specimens in a direction perpendicular to a rolling direction. At this time, the yield strength and elongation represent a 0.2% offset yield strength and fracture elongation, respectively.

The surface quality was evaluated by observing surfaces of the plated steel sheets. Specifically, when an area of an unplated region was less than 3% of a total immersed area, plating properties were determined to be good and were rated as ∘, and when an unplated area fraction was 3% or more, plating properties were determined to be poor and were rated as ×.

**[Table 3]**

| Classification | Matrix structure | Second phase | | | Properties before heat treatment | | | Properties after heat treatment | | | |
|---|---|---|---|---|---|---|---|---|---|---|---|
| | BF | TLB+TLM | TMA phase | Average equivalent circle diameter (µm) | YP | TS | El | YP | TS | EL | Surface quality |
| Inventive example 1 | 77.8 | 21.9 | 0.3 | 3.6 | 731 | 1081 | 12 | 883 | 1032 | 12 | ○ |
| Inventive example 2 | 79.5 | 20.3 | 0.2 | 4.1 | 717 | 1059 | 13 | 864 | 1013 | 12 | ○ |
| Inventive example 3 | 74.9 | 24.9 | 0.2 | 4.2 | 694 | 1059 | 11 | 836 | 1008 | 12 | ○ |
| Inventive example 4 | 84.3 | 15.5 | 0.2 | 3.9 | 768 | 1093 | 13 | 924 | 1042 | 14 | ○ |
| Inventive example 5 | 77.3 | 22.4 | 0.2 | 4.0 | 738 | 1098 | 12 | 889 | 1050 | 12 | ○ |
| Inventive example 6 | 84.5 | 15.3 | 0.2 | 3.9 | 725 | 1057 | 14 | 872 | 1007 | 14 | ○ |
| Inventive example 7 | 71.5 | 28.0 | 0.4 | 4.4 | 744 | 1137 | 9 | 899 | 1084 | 10 | ○ |
| Inventive example 8 | 77.2 | 22.5 | 0.3 | 3.9 | 738 | 1087 | 12 | 889 | 1036 | 12 | ○ |
| Inventive example 9 | 74.0 | 25.8 | 0.2 | 4.1 | 705 | 1070 | 11 | 849 | 1019 | 12 | ○ |
| Comparative example 1 | 72.4 | 22.9 | 4.7 | 3.8 | 773 | 1151 | 14 | 1001 | 1099 | 14 | × |
| Comparative example 2 | 89.2 | 10.7 | 0.1 | 4.3 | 618 | 907 | 15 | 744 | 867 | 15 | ○ |
| Comparative example 3 | 81.6 | 11.2 | 7.2 | 1.8 | 772 | 1105 | 13 | 1038 | 1055 | 13 | ○ |
| Comparative example 4 | 81.3 | 12.1 | 6.5 | 1.7 | 755 | 1090 | 13 | 1001 | 1043 | 12 | ○ |
| Comparative example 5 | 91.6 | 8.2 | 0.1 | 4.1 | 720 | 998 | 15 | 866 | 955 | 14 | ○ |
| Comparative example 6 | 41.8 | 57.4 | 0.8 | 3.6 | 872 | 1264 | 8 | 1059 | 1206 | 8 | ○ |
| Comparative example 7 | 78.4 | 21.2 | 0.2 | 3.2 | 715 | 1073 | 12 | 526 | 726 | 18 | ○ |
| - BF: Bainitic ferrite | | | | | | | | | | | |
| - TLB: Tempered low-temperature bainite | | | | | | | | | | | |
| - TLM: Tempered lath martensite | | | | | | | | | | | |
| - TMA phase: Tempered martensite-austenite constituent | | | | | | | | | | | |

As shown in Tables 1 to 3, it was confirmed that, in Inventive Examples 1 to 9, which satisfied all of the alloy compositions and manufacturing conditions proposed in the present disclosure, the microstructures included, as a matrix structure, bainitic ferrite at an area fraction of 65 to 90% and, as a second phase, tempered low-temperature bainite, tempered lath martensite, and/or a tempered martensite-austenite constituent (TMA phase) at an area fraction of 10 to 35%. In particular, it was found that Inventive Examples 1 to 9 satisfied an area fraction of less than 3% for the TMA phase, thereby achieving the desired strength and form stability.

That is, it was confirmed that Inventive Examples 1 to 9 satisfied all of the alloy compositions and manufacturing conditions proposed in the present disclosure, thereby ensuring appropriate types and fractions of the matrix structure and the second phase, and consequently achieved a yield strength of 700 to 950 MPa, a tensile strength of 980 MPa or more, and an elongation of 9% or more.

Meanwhile, it was found that, in Comparative Example 1, Si was contained in a significantly excessive amount, significant unplated regions were observed, and surface quality was poor, and that the TMA phase was also excessively formed, resulting in an excessively high yield strength.

In addition, it was also confirmed that, in Comparative Example 2, Mn was contained in a significantly small amount, and the tensile strength was measured to be lower than 980 MPa.

In addition, it was also found that, in Comparative Examples 3 and 4, considering that Du represented by Relational Expression 1 was calculated to be less than 5, the finishing delivery temperature during hot rolling was somewhat low, the TMA phase was excessively formed, and, as a result, the yield strength was excessively high. In Comparative Examples 3 and 4, because Du was low, austenite grain size was fine, and accordingly, an average equivalent circle diameter of the second phase was also measured to be low.

In addition, it was also found that, in Comparative Example 5, considering that a value of Relational Expression 2 was calculated to be greater than 0.9, the second cooling time was excessive, a sufficient fraction of the second phase was not ensured, and, as a result, the yield strength was excessively high.

In addition, it was also found that, in Comparative Example 6, considering that a value of Relational Expression 2 was calculated to be less than 0.65, the second cooling time was insufficient, a sufficient fraction of the matrix structure was not ensured, and, as a result, the elongation was low.

In addition, it was also found that, in Comparative Example 7, the heat treatment temperature was significantly high, the second phase was excessively tempered, and, as a result, the tensile strength and yield strength decreased significantly.

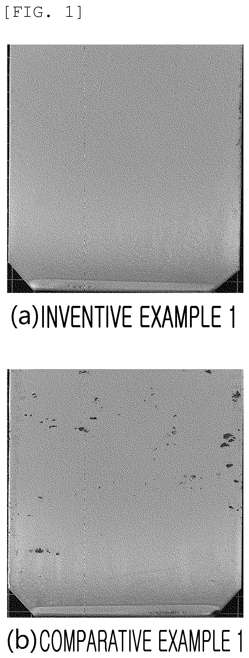

Meanwhile, FIG. 1 shows photographs of appearances of the plated steel sheets of Inventive Example 1 and Comparative Example 1. Specifically, FIG. 1(a) is the photograph of Inventive Example 1, from which it was confirmed that no unplated region was formed over the entire area immersed in the plating bath. Meanwhile, FIG. 1(b) is the photograph of Comparative Example 1, from which it was confirmed that, because Si was contained in a significantly excessive amount, a number of unplated regions were formed and plating properties deteriorated.

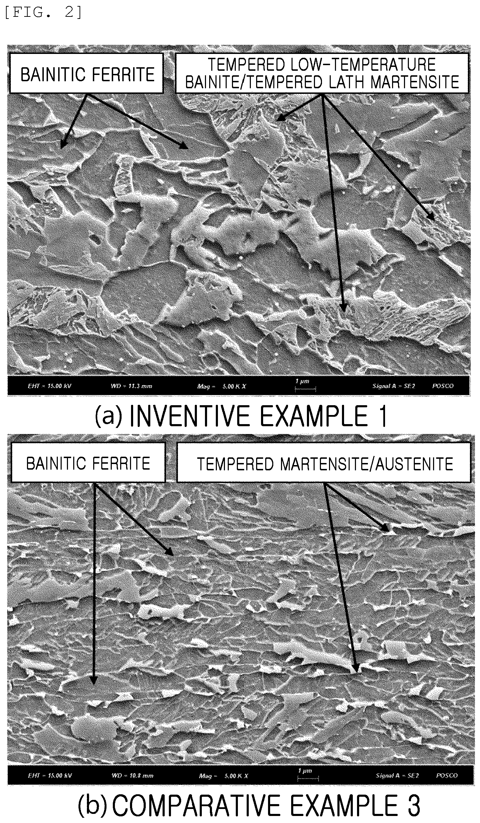

In addition, FIG. 2 shows photographs of the microstructures of Inventive Example 1 and Comparative Example 3 observed with a scanning electron microscope. Specifically, FIG. 2(a) is the photograph of Inventive Example 1, from which it was confirmed that the matrix structure and the second phase intended in the present disclosure were appropriately formed. Meanwhile, FIG. 2(b) is the photograph of Comparative Example 3, from which it was confirmed that the TMA phase was excessively formed and, as a result, the yield strength was measured to be significantly high.

The above embodiment is merely an example, and the present disclosure is not limited thereto. Any configuration having substantially the same constitution as the technical idea described in the claims of the present disclosure and achieving the same operational effects is included in the technical scope of the present disclosure.

## Claims

1. A plated steel sheet comprising:
a base steel sheet; and
a plating layer provided on at least one surface of the base steel sheet,
wherein the base steel sheet contains, by wt%, 0.05 to 0.25 of carbon (C), 0.001 to 0.6 of silicon (Si), 1.2 to 3.0 of manganese (Mn), 0.001 to 1.0 of aluminum (Al), 0.0001 to 0.05 of phosphorus (P), 0.0001 to 0.05 of sulfur (S), 0.0001 to 0.02 of nitrogen (N), and a balance of Fe and inevitable impurities,
a microstructure of the base steel sheet includes 65 to 90 area% of a first phase including bainitic ferrite,
the microstructure of the base steel sheet includes 10 to 35 area% of a second phase including one or more of tempered low-temperature bainite and tempered lath martensite, and a tempered martensite-austenite constituent (TMA phase), and
an area fraction of the tempered martensite-austenite constituent relative to the total area fraction of the microstructure is less than 3 area%.

2. The plated steel sheet of claim 1, wherein the second phase has an average equivalent circle diameter of 2 to 20 µm.

3. The plated steel sheet of claim 1, wherein the microstructure of the base steel sheet further includes less than 5 area% of carbides relative to the total area fraction of the microstructure.

4. The plated steel sheet of claim 1, wherein the base steel sheet further contains, by wt%, one or more of 0.01 to 2.0 of chromium (Cr), 0.01 to 2.0 of molybdenum (Mo), 0.001 to 0.2 of titanium (Ti), and 0.001 to 0.2 of niobium (Nb).

5. The plated steel sheet of claim 1, wherein the plated steel sheet has a yield strength of 700 to 950 MPa.

6. The plated steel sheet of claim 1, wherein the plated steel sheet has a tensile strength of 980 MPa or more and an elongation of 9% or more.

7. A method for manufacturing a plated steel sheet, the method comprising:
reheating a slab containing 0.05 to 0.25 of carbon (C), 0.001 to 0.6 of silicon (Si), 1.2 to 3.0 of manganese (Mn), 0.001 to 1.0 of aluminum (Al), 0.0001 to 0.05 of phosphorus (P), 0.0001 to 0.05 of sulfur (S), 0.0001 to 0.02 of nitrogen (N), and a balance of Fe and inevitable impurities in a temperature of 1,100 to 1,350°C;
hot-rolling the reheated slab to obtain a hot-rolled steel sheet;
subjecting the hot-rolled steel sheet to first cooling to a temperature of Bs or lower at a cooling rate of 30°C/s or more;
subjecting the first-cooled steel sheet to second cooling to a temperature of (Bs+Ms)/2 or higher at a cooling rate of 20°C/s or less;
subjecting the second-cooled steel sheet to third cooling to a temperature of Bs to Ms-40°C at a cooling rate of 30°C/s or more;
coiling the third-cooled steel sheet;
cooling the coiled steel sheet to room temperature;
pickling the cooled steel sheet and subjecting the pickled steel sheet to heat treatment in a temperature of 400 to 700°C; and
plating the heat-treated steel sheet.

8. The method of claim 7, wherein, in the obtaining of the hot-rolled steel sheet, the reheated slab is hot-rolled at a finishing delivery temperature (FDT) of 800 to 1,150°C so that a value of the following Relational Expression 1 satisfies 5 to 15: [Relational Expression 1] 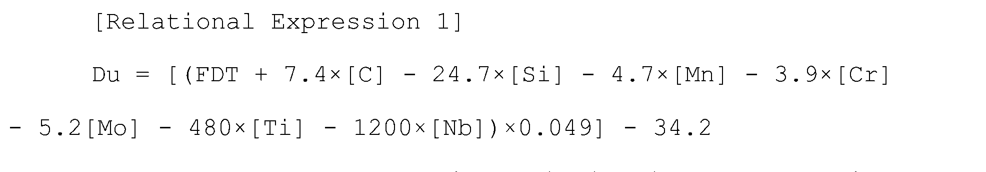 Du = [(FDT + 7.4×[C] - 24.7×[Si] - 4.7×[Mn] - 3.9×[Cr] - 5.2[Mo] - 480×[Ti] - 1200×[Nb])×0.049] - 34.2 where Du represents an index indicating an effective grain size of austenite immediately before first cooling after hot rolling, FDT represents a finishing delivery temperature (°C), and each element represents a content (wt%).

9. The method of claim 7, wherein, in the obtaining of the hot-rolled steel sheet, a total rolling reduction of the final two passes is 10 to 40%.

10. The method of claim 7, wherein the second cooling is performed for a time (ts) satisfying the following Relational Expression 2: [Relational Expression 2] $0.65 \leq 1 - exp \left[-k\left(T\right)\times {\left(ts\right)}^{2}\right] \leq 0.9$ where k(T) represents a value defined by the following Relational Expression 3, [Relational Expression 3] $k \left(T\right) = \frac{20}{Du} exp \left\{-{\left(\frac{\left(T1+2\times T2\right) / 3 - 557 + 320 \left[C\right] + 35 \left[Si\right] + 90 \left[Mn\right] + 70 \left[Cr\right] + 120 \left[Mo\right]}{112}\right)}^{1.92}\right\}$ where T1 represents a first cooling end temperature, T2 represents a second cooling end temperature, and each element represents a content (wt%).

11. The method of claim 7, wherein the heat treatment is performed for 2 to 200 seconds.

12. The method of claim 7, wherein, in the plating, the heat-treated steel sheet is zinc-plated by immersing the heat-treated steel sheet in a Zn-based plating bath.
